# EUROPEAN PATENT APPLICATION

(11) **EP 0 950 975 A2**
(43) Date of publication of application: **20.10.1999**
(21) Application number: 99301227.7
(22) Date of filing: 19.02.1999
(51) Int. Cl.: G06K 7/00

(54) **Card reader**

(30) Priority: 20.02.1998 US 75614 P
(71) Applicant: THE WHITAKER CORPORATION, Wilmington, Delaware 19808 (US)
(72) Inventor: Smally, Jared J, Jr, Camp Hill, PA 17011 (US)
(74) Representative: Warren, Keith Stanley

(57) **Abstract**

A card reader includes a housing having a top wall, an open end defining a card-receiving slot (40), and an array of terminals (50). The card-receiving slot (40) is spaced upwardly a selected distance from a board-mounting face (22) of the housing (12). The top wall includes an opening (18) therethrough in communication with the card-receiving slot (40) at a position remote from the terminals (50), the opening (18) being aligned with a corresponding opening in the housing (12) beneath the card-receiving slot (40). Portions of a circuit board (70) beneath the housing are exposed for access from above the card reader after mounting to the board (70), when a card (60) is not disposed in the card-receiving slot (40), thereby permitting low profile electronic components (76) to be mounted on the exposed portions of the board or tested or removed therefrom.

## Description

This invention is directed to card readers.

Card readers mounted to circuit boards are used in many electronic devices to provide various capabilities. The size of the card reader depends upon the dimension of the card that contains the stored information. With the increased interested in miniaturizing electronic devices, such as, cellular telephones, pagers, toys and the like, there is a need to decrease the amount of space required for the circuit board. In addition to the board space required for the card reader, space is also required to mount various electronic components, such as resistors, capacitors and the like, that also occupy space on the board. It is desirable therefore to provide a card reader that helps to minimize the size of the circuit board used in the electronic apparatus.

The present invention is directed to a card reader that alleviates problems associated with the prior art. The card reader includes an insulated housing, having a top wall, opposed side walls, a closed end, and an open end defining a card-receiving slot and an array of terminals. The housing also defines a board-mountable face. The terminals have respective board connecting sections exposed along the board mounting face for connection to circuits of the circuit board and card-connecting sections exposed in the card receiving slot. The card receiving slot is spaced upwardly a selected distance from the board mounting face. The top wall includes an opening therethrough in communication with the card-receiving slot remote from the card-connecting sections and board-connecting sections of the terminals. The opening is aligned with a corresponding opening in the housing beneath the card-receiving slot whereby portions of the board beneath the housing are exposed for access from above the card reader after mounting to the board and when a card is not disposed in the card-receiving slot. Low profile electronic components can then be mounted on the exposed portion of the circuit board, tested or removed therefrom. Owing to the placement of the desired electronic components beneath the card reader, the circuit board required for the electronic device can be made substantially smaller.

The invention consists in a card reader comprising a housing including a top wall, card-receiving slot, and a board-mounting face,
said card-receiving slot being spaced upwardly a selected distance from said board-mounting face; and said top wall including an opening therethrough in communication with said card-receiving slot, said opening being aligned with a corresponding opening in said housing beneath said card-receiving slot,
whereby portions of a board beneath said housing are exposed for access from above said housing after mounting to said board, when a card is not disposed in said card-receiving slot, thereafter permitting low profile electronic components to be mounted on said exposed portions of said board or tested or removed therefrom.

An embodiment of the invention will now be described with reference to the accompanying drawings, in which:-

FIGURE 1 is an isometric view of the card reader of the present invention mounted to a circuit board and having a card inserted therein.

FIGURE 2 is an isometric view of the card reader of Figure 1 exploded from the circuit board and with the card removed and illustrating components mounted to the board beneath the card reader.

FIGURE 3 is an isometric view of the board mounting face of the card reader of Figure 1 having a card partially inserted therein.

FIGURE 4 is an isometric view similar to Figure 1 with the card partially inserted into the reader and illustrating the position of the components mounted on the circuit board.

FIGURE 5 is a side view of the card reader of Figure 1.

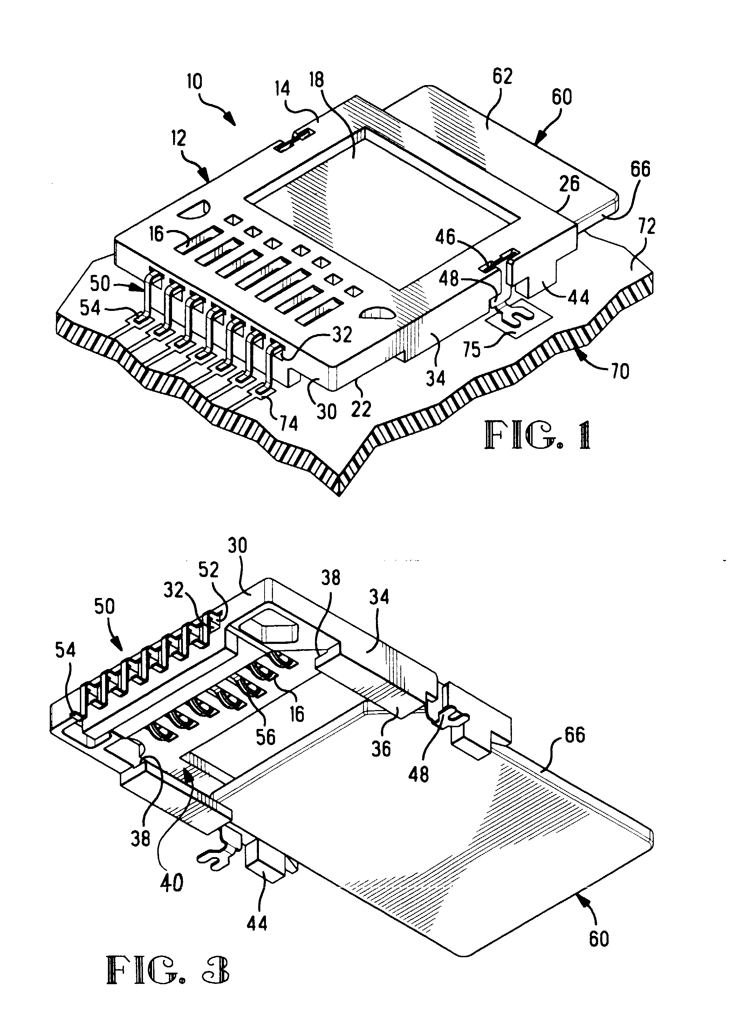

Referring now to Figures 1 through 5, card reader 10 includes a housing 12 having a top wall 14, a bottom or board mounting face 22, a card-receiving face 26, a rear face or wall 30, and opposed side walls 34, together defining a card-receiving slot 40 and an array of terminals 50. Top wall 14 includes a plurality of slots 16 that provide clearance for the terminals 50 when they engage pads 64 of the card 60.

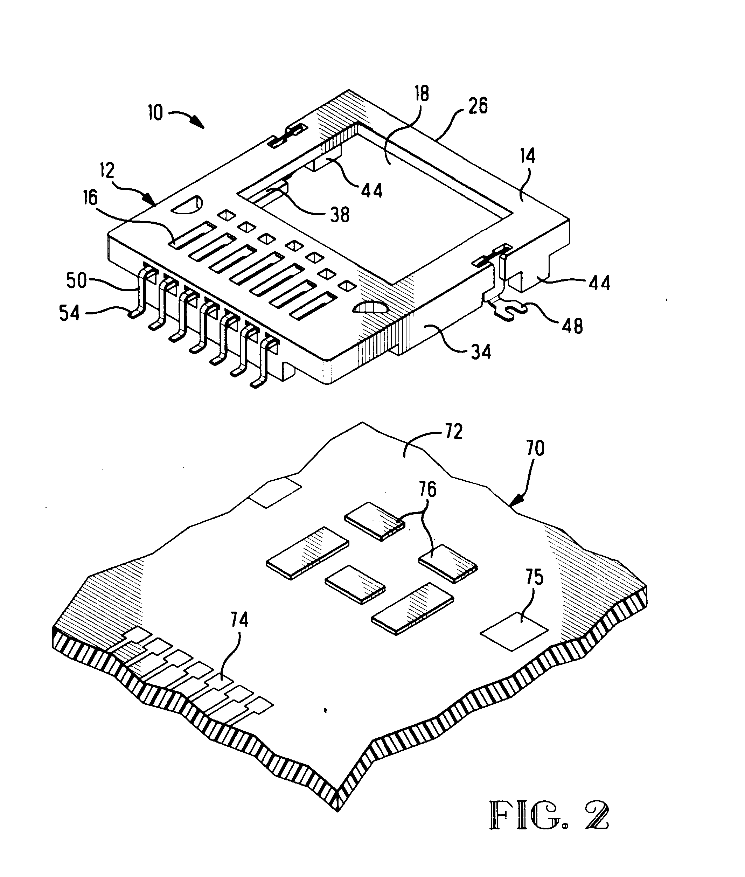

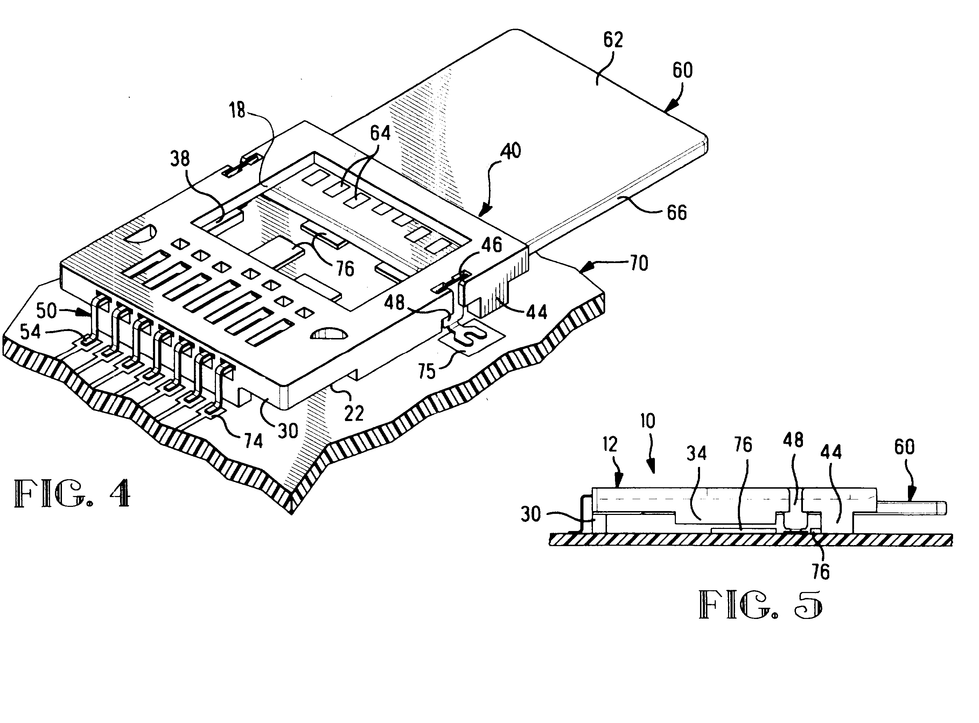

An enlarged opening 18 remote from the terminals 50 extends through the top wall 14 and is aligned with a corresponding opening beneath the card-receiving slot 40. When card reader 10 is mounted to a circuit board 70, opening 18 permits access to the surface 72 of the circuit board 70 to permit placement of various components 76 on the board, as shown in Figures 2 and 4.

Rear wall 30 includes a plurality of terminal-receiving passageways 32 in which are disposed the terminals 50. Side walls 34 include inwardly directed portions 36 at the lower edges thereof defining card-receiving rails 38 along portions of the side walls 34 dimensioned to receive side edges 66 of a card 60 inserted into the card receiving cavity 40, as shown in Figure 3. Card-receiving cavity 40 includes an inner end 42 which defines a card stop surface. Side walls 34 further include hold-down receiving slots 46 for receiving hold-downs 48 and stand-off portions 44 proximate card-receiving face 26. As can be seen in Figures 1, 4 and 5, the rear wall 30 and stand-off portions 44 are elongated to provide a selected distance between the circuit board surface 72 and the card-receiving slot 40 such that low profile electronic components 76 may be mounted to the circuit board and not interfere with the operation of the card 60 being inserted or withdrawn from the card reader 10.

Terminals 50 include body portions 52. board connecting sections 54 and card-connecting sections 56 for engaging circuit pads 64 on the surface 62 of card 60. It is to be understood that the board connecting sections 54 may be leads that are received in through holes of the board or surface mounted as shown herein.

In accordance with the invention, surface 72 of circuit board 70 includes a plurality of contact pads 74 for engaging respective board connecting sections 54 of card reader 10 and a plurality of contact pads (not shown) to which components 76 can be mounted. In assembling the card reader of the present invention, the card reader 10 is first positioned on circuit board 70 by means of solder paste, or the like (not shown), and the low profile electronic components are then mounted to board 70 through the opening 18. This allows the manufacturer to position the components and the card reader at optimum locations. The board with the components and the card reader thereon can then be soldered by means of infrared, or other techniques, as known in the art to cause the solder to flow to electrically and mechanically secure the card reader 10 and the components 76 to the circuit board 70. It is to be understood the term solder also includes conductive adhesives or other materials used to electrically connect electrical devices to boards. Additionally, the electronic components may have leads that are to be secured by solder or the like in through holes of the board by solder reflow techniques. The hold-downs 48 may be soldered to pads 75 or, alternatively, attached by mechanical means to the board 70.

The present invention provides an advantage of minimizing the size of the circuit board 70 thereby permitting the electronic apparatus, such as, a cellular telephone or pager to be made considerably smaller.

## Claims

1. A card reader (10) comprising a housing (12) including a top wall (14), card-receiving slot (40) and a board-mounting face (22), characterized in that
said card-receiving slot (40) is spaced upwardly a predetermined distance from said board-mounting face (22) and said top wall (14) includes an opening (18) therethrough in communication with said card-receiving slot (40), said opening (40) being aligned with a corresponding opening in said housing (12) beneath said card-receiving slot (40), whereby portions of a board (70) beneath said housing (12) are exposed for access from above said housing (10) after mounting to said board (70) and when a card (60) is not disposed in said card-receiving slot (40).

2. The card reader of claim 1, wherein the housing (12) includes an array of terminals (50) having board connecting sections (54) exposed along said board-mounting face (22) and card connecting sections (56) exposed in said card receiving slot (40).

3. The card reader of claim 2, wherein the opening (18) is remote from the card connecting sections (56) and board connecting sections (22).

4. The card reader of claim 1, 2 or 3, wherein the housing (12) has side walls (34) with rails (38) therealong to receive side edges of a card.

5. The card reader of claim 1, 2, 3 or 3, wherein the housing (12) has stand offs (44) proximate the board mounting face (22).
